# EUROPÄISCHE PATENTSCHRIFT

(11) **EP 2 620 316 B1**
(45) Veröffentlichungstag und Bekanntmachung des Hinweises auf die Patenterteilung: **08.07.2015**
(21) Anmeldenummer: 13450002.4
(22) Anmeldetag: 17.01.2013
(51) Int. Cl.: B60M 1/24, B60M 1/26

(54) **Halter für den Fahrdraht von Einfach-Fahrleitungen**
Support for the catenary wire of single catenary lines
Support pour un fil conducteur de caténaires simples

(30) Priorität: 25.01.2012 AT 972012
(43) Veröffentlichungstag der Anmeldung: 31.07.2013
(73) Patentinhaber: Ing. Karl u. Albert Kruch GmbH & Co. KG, 1230 Wien (AT)
(72) Erfinder: Röhl, Jan Dipl.-Ing., 2500 Siegenfeld (AT)
(74) Vertreter: Rippel, Andreas

(56) Entgegenhaltungen:
- DE-C- 622 978
- DE-C- 625 392
- DE-C- 711 298
- DE-C- 901 182
- DE-C- 935 439
- FR-A- 453 775

## Beschreibung

Die Erfindung bezieht sich auf einen Halter für den Fahrdraht von Einfach-Fahrleitungen elektrischer Bahnen während deren Betrieb.

Für Einfach-Fahrdraht-Fahrleitungen, wie sie oft im städtischen Bereich für Straßenbahn-Fahrleitungen verwendet werden, kommen zur vertikalen Aufhängung des Fahrdrahtes Seitenhalter bzw. Fahrdrahtklemmen zum Einsatz. Der Fahrdraht wird dabei an einem Ausleger oder an einem Querseil, welches zwischen zwei Fahrleitungsmasten oder Hauswänden gespannt wird, fixiert.

Dabei wird neben der vertikalen Positionierung des Fahrdrahtes auch eine seitliche Verspannung erzielt, die den gewünschten Zick-Zack-Verlauf des Fahrdrahtes herstellt. Dies hat den Zweck, dass der Fahrdraht den Stromabnehmerbügel der Straßenbahn in einer ständig wechselnden Position auf voller Breite beschleift und an keiner Stelle Rillen im Abnehmer verursacht.

Bei besonders einfachen Bauarten wird der Fahrdraht bei Montage einmalig auf eine definierte Zugspannung gezogen und in dieser fixiert, ohne variable Nachspannung. Das hat zur Folge, dass bei besonders warmen Temperaturen die Zugspannung im Fahrdraht eher gering ist (Fahrdraht hängt durch), bei besonders kalten Temperaturen eher hoch (Fahrtdraht ist überspannt). Das System befindet sich daher selten im gewünschten idealen mechanischen Zustand.

Besteht der Wunsch, die vorhandene Fahrleitung zu verbessern, bietet sich eine Nachrüstung mit einem automatischen Nachspannsystem an. Dieses stellt eine konstante Zugspannung im Fahrdraht her, und zwar durch Feder- oder Gewichtskraftbeaufschlagung des Fahrdrahtes. Dies verursacht eine temperaturbedingte Längsbewegung des Fahrdrahtes von bis zu ein bis zwei Meter. Herkömmliche Fahrdrahtklemmen ermöglichen keine derartige Längsbewegung des Fahrdrahtes, wodurch nun hohe Kräfte in die Querseile eingeleitet werden und zu entsprechenden, unzulässigen Verspannungen führen.

In der DE 102 40 432 A1 ist beschrieben eine Vorrichtung zur Befestigung eines Fahrdrahtes einer Oberleitung an einem Seitenhalter eines Auslegers insbesondere eines Oberleitungs-mastes während eines Ziehens und Abspannens des Fahrdrahtes. Dieses Ziehen und Abspannen des Fahrdrahtes erfolgt bei Neueinrichtung oder Austausch des Fahrdrahtes der Oberleitung. Die bekannte Vorrichtung beinhaltet mindestens eine Führungsrolle sowie eine Bügelkonstruktion für die Führungsrolle, auf der sich der Fahrdraht während des Ziehens und Abspannens am Seitenhalter bewegt.

Nach der Montage des Fahrdrahtes muss die Konstruktion wieder abgebaut werden.

Die Deutsche Patentschrift DE 625 392 C1 offenbart einen Halter für den Fahrdraht von Einfach-Fahrleitungen elektrischer Bahnen während deren Betrieb, bei dem zur seitlichen Führung des Fahrdrahtes Rollen und zur Auflage des Fahrdrahtes Gleitführungen oder Rollen angeordnet sind, sowie ein den Stromabnehmer der elektrischen Bahn im Bereich des Halters nach unten lenkender Bügel vorgesehen ist, der mit dem Fahrdraht elektrisch verbindbar ist, wobei der Halter einen mehrteiligen den Fahrdraht umschließenden Körper aufweist, wobei die Teile des Körpers lösbar miteinander verbunden sind.

Die Erfindung hat es sich zum Ziel gesetzt, einen Halter für den Fahrdraht von Einfacn-Fahrleitungen zu schaffen, durch den während des Betriebes eine einwandfreie Führung des Fahrdrahtes ohne unzulässige Verspannungen desselben erreicht wird.

Dies erfolgt durch einen Halter gemäß Anspruch 1.

Ein erfindungsgemäßer Halter erfüllt, wie Versuche gezeigt haben, tatsächlich die gestellten Anforderungen. Überdies ist eine einfache Installation möglich. Es wird lediglich die vorhandene Fahrdrahtklemme inklusive Befestigungsarmatur am Querseil oder am Ausleger demontiert und durch den erfindungsgemäßen Halter ersetzt. Während des Betriebes wird der Stromabnehmer über den Bügel sanft nach unten abgelenkt, um eine Kollision mit dem Halter zu vermeiden. Der Bügel versorgt dabei den Stromabnehmer unterbrechungsfrei mit dem benötigten Fahrstrom.

Bei einem erfindungsgemäßen Halter ist der den Fahrdraht umschließende Körper zweiteilig, wobei der die Rolle(n) aufnehmende Teil mit einem den Fahrdraht tragenden Teil lösbar verbunden, insbesondere verschraubt ist. Dadurch wird ein einfaches Einführen des Fahrdrahtes in den Halter ermöglicht.

Der den Fahrdraht tragende Teil ist erfindungsgemäß L-förmig ausgebildet, wobei auf dem waagrechten Schenkel der Fahrdraht liegt und der lotrechte Schenkel mit dem die Rolle aufnehmenden Teil lösbar verbunden ist.

Um den Halter an einem Ausleger oder einem Querseil anbringen, zu können, kann der die Rolle aufnehmende Teil mit einer Aufhängevorrichtung versehen sein.

Nachstehend ist die Erfindung anhand eines in den Zeichnungen dargestellten Ausführungsbeispieles näher beschrieben, ohne auf dieses Beispiel beschränkt zu sein. Dabei zeigen:
- Fig. 1: eine schaubildliche Ansicht, teilweise geschnitten, eines erfindungsgemäßen Halters;
- Fig. 2: einen Schnitt durch den erfindungsgemäßen Halter; in den Fig. 1 und 2 ist der den Stromabnehmer nach unten lenkende Bügel nicht dargestellt;
- Fig. 3: ein weiteres Beispiel eines Halters in einer Darstellung entsprechend Fig. 1;
- Fig. 4: eine Seitenansicht des erfindungsgemäßen Halters nach Fig. 3;
- Fig. 5: eine Draufsicht auf den Halter nach Fig. 3.

Gemäß den Zeichnungen ist ein Halter 1 zur Führung eines Fahrdrahtes 2 von Einfach-Fahrleitungen elektrischer Bahnen vorgesehen.

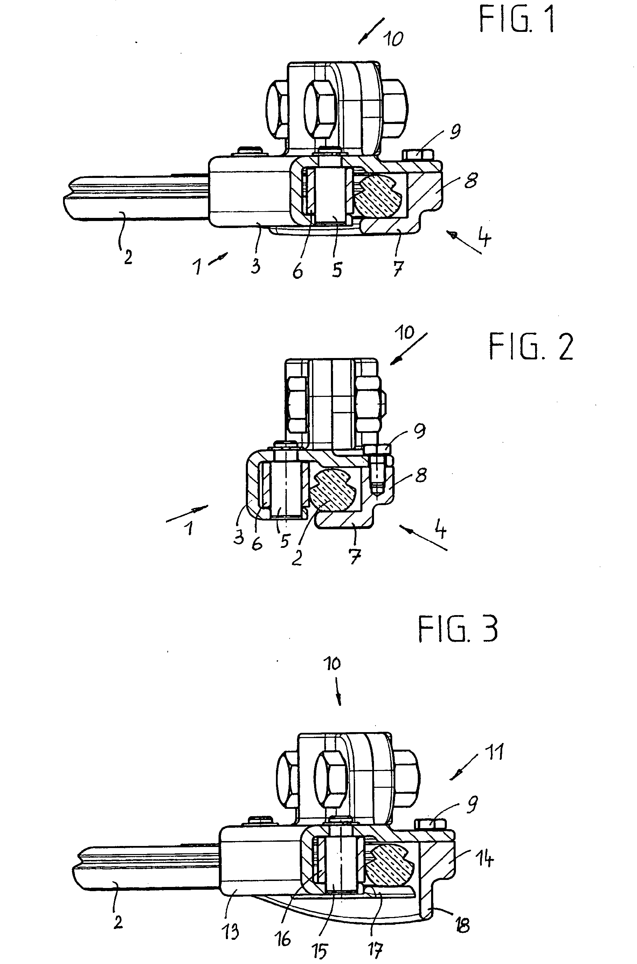

Der Halter 1 besteht gemäß den Fig. 1 und 2 aus zwei Teilen 3 und 4, die miteinander verschraubt sind. Im Teil 3 ist eine Rolle 5 gelagert, die mit einem Überzug 6 versehen ist. Der Fahrdraht 2 wird dabei durch die Rolle 5 seitlich geführt.

Der zweite Teil 4 des Halters 1 ist L-förmig ausgebildet und besitzt einen in der Betriebsstellung waagrechten Schenkel 7 und einen lotrechten Schenkel 8.

Der Fahrdraht 2 liegt auf dem waagrechten Schenkel 7 auf, in den lotrechten Schenkel 8 sind die Verbindungsschrauben 9 zur Verschraubung der beiden Teile 3 und 4 eingeschraubt.

Der die Rollen 5 aufnehmende Teil 3 des Halters 1 ist mit einer Aufhängevorrichtung 10 versehen, mittels der der Halter 1 an einem Ausleger oder an einem Querseil aufgehängt werden kann.

Wie ersichtlich, wird der Fahrdraht 2 durch den erfindungsgemäßen Halter sowohl seitlich als auch nach unten sicher geführt, wobei auch eine Zick-Zack-Führung des Fahrdrahtes 2 möglich ist.

Mit dem Halter 1 ist ein Bügel (nicht dargestellt) verbunden, der den Stromabnehmer der elektrischen Bahn unter den Halter 1 führt.

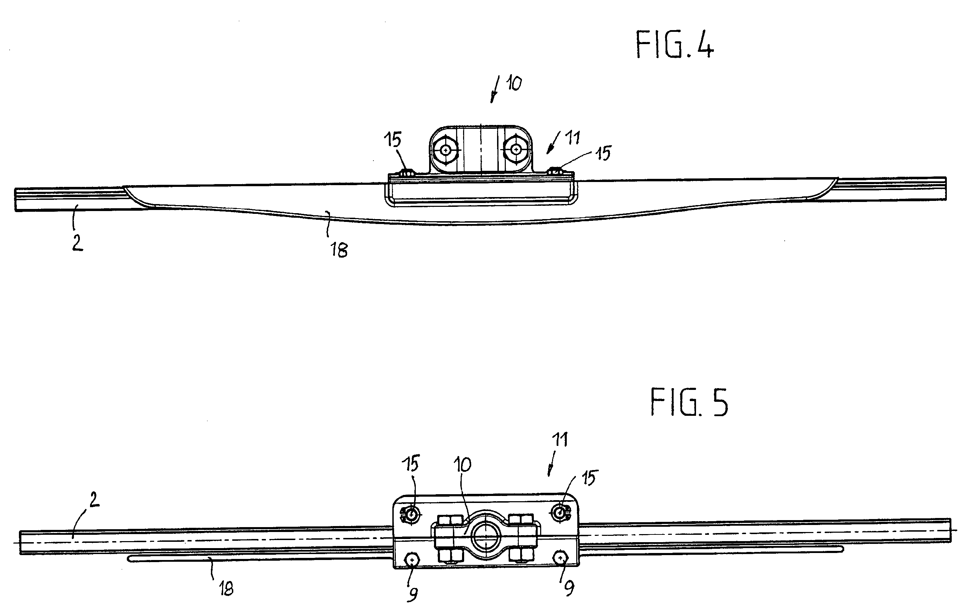

Beim Beispiel nach den Fig. 3, 4 und 5, das nicht zur Erfindung gehöst, besteht der Halter 11 wieder aus zwei miteinander verschraubten Teilen 13 und 14 eine Rolle 15 führt den Fahrdraht 2 seitlich, wobei dieser auf einer Gleitführung 17 aufliegt.

Der Teil 14 ist nach unten zur Bildung eines den Stromabnehmer nach unten führenden Bügels 18 verlängert.

Im Rahmen der Erfindung sind zahlreiche Abänderungen möglich. So könnten die beiden Teile 3 und 4 konstruktiv anders ausgebildet sein. Wesentlich ist, dass sowohl eine seitliche als auch eine vertikale Führung des Fahrdrahtes erreicht wird. Die vertikale Führung könnte statt durch eine Gleitführung durch eine Rollenführung erfolgen.

Die Aufhängevorrichtung 10 könnte in vielfältiger Weise gegenüber der gezeichneten Ausführungsform verändert werden.

## Patentansprüche

1. Halter (1) für den Fahrdraht (2) von Einfach-Fahrleitungen elektrischer Bahnen während deren Betrieb, bei dem zur seitlichen Führung des Fahrdrahtes (2) Rollen (5) und zur Auflage des Fahrdrahtes (2) Gleitführungen (7) oder Rollen angeordnet sind sowie ein den Stromabnehmer der elektrischen Bahn im Bereich des Halters (1) nach unten lenkender Bügel vorgesehen ist, der mit dem Fahrdraht (2) elektrisch verbindbar ist, wobei der Halter (1) einen zweiteiligen den Fahrdraht (2) umschließenden Körper (3, 4) aufweist, wobei die Teile (3, 4) des körpers lösbar miteinander verbunden, insbesondere verschraubt (9) sind,
wobei den Fahrdraht (2) tragende Teil (4) des Körpers L-förmig ist, und wobei auf dem waagrechten Schenkel (7) des L-förmigen Teils (4) der Fahrdraht (2) liegt und der lotrechte Schenkel (4) des L-Förmigen Teils (4) mit dem die Rolle (5) aufnehmenden Teil (3) des Körpers lösbar verbunden ist.

## Claims

1. A holder (1) for the contact wire (2) of single overhead lines of electric tracked vehicles during operation of the latter, in which rollers (5) are arranged so as to provide lateral guidance of the contact wire (2), and sliding guides (7) or rollers are arranged so as to support the contact wire (2), and a frame deflecting the current collector of the electric tracked vehicle downward in the region of the holder (1) is provided, which frame can be electrically connected with the contact wire (2), wherein the holder (1) has a two-part body (3, 4) enclosing the contact wire (2), wherein the parts of the body (3 ,4) are detachably connected with one another, in particular are screwed together (9), wherein the part (4) of the body carrying the contact wire (2) is L-shaped, and the contact wire (2) lies on the horizontal arm (7) of the L-shaped part (4), and the vertical arm (4) of the L-shaped part (4) is detachably connected with the part (3) of the body accommodating the roller (5).

## Revendications

1. Support (1) pour le conducteur aérien (2) de caténaires simples de trains électriques pendant leur exploitation, dans lequel des rouleaux (5) sont mis en place pour le guidage latéral du conducteur aérien (2) et des guides coulissant (7) ou rouleaux étant mis en place pour l'appui du conducteur aérien (2), ainsi qu'un étrier dirigeant vers le bas le collecteur de courant du train électrique dans la zone du support (1) étant prévu, lequel peut être connecté électriquement au conducteur aérien (2), dans lequel le support (1) est partagé en un corps (3, 4) en deux parties entourant le conducteur aérien (2), dans lequel les parties du corps (3, 4) sont reliées ensemble de manière détachable en étant en particulier vissées (9), dans lequel la partie (4) du corps portant le conducteur aérien (2) est en forme de L, et dans lequel le conducteur aérien (2) repose sur le bras horizontal (7) de la partie (4) en forme de L et le bras (4) vertical de la partie (4) en forme de L étant relié de manière détachable avec la partie (3) du corps réceptionnant le rouleau (5).
